Europäisches Patentamt

European Patent Office

Office européen des brevets

(11) Veröffentlichungsnummer: **0 452 711 A2**

## EUROPÄISCHE PATENTANMELDUNG

(21) Anmeldenummer: **91104721.5**

(22) Anmeldetag: **26.03.91**

(51) Int. Cl.⁵: **C09C 3/00**

(30) Priorität: **19.04.90 DE 4012457**

(43) Veröffentlichungstag der Anmeldung:
**23.10.91 Patentblatt 91/43**

(84) Benannte Vertragsstaaten:
**AT BE CH DE DK ES FR GB GR IT LI LU NL SE**

(71) Anmelder: **Zinkweiss-Forschungsgesellschaft mbH**
**Halberstädter Strasse 13**
**W-3380 Goslar(DE)**

(72) Erfinder: **Burkhardt, Jahn, Dr. Dipl.-Chem.**
**Bergstrasse 37**
**W-3388 Bad Harzburg(DE)**

(74) Vertreter: **Werner, Hans-Karsten, Dr. et al**
**Deichmannhaus am Hauptbahnhof**
**W-5000 Köln 1(DE)**

(54) Oberflächenbehandelte Metalloxide und Verfahren zu ihrer Herstellung.

(57) Gegenstand der Erfindung sind mit reaktiven und/oder nicht reaktiven Beschichtungsmitteln beschichtete Metalloxide sowie ein Verfahren zur Herstellung derselben, wobei durch Mikrowellen anregbare Metalloxide mit geeigneten Beschichtungsmitteln oberflächenbehandelt werden und die Energiezufuhr bei der Oberflächenbehandlung durch Mikrowellen erfolgt.

EP 0 452 711 A2

Gegenstand der vorliegenden Erfindung sind mit reaktiven und/oder nicht reaktiven Beschichtungsmitteln beschichtete Metalloxide und ein Verfahren zu ihrer Herstellung. Die Oberflächenbehandlung von Metalloxiden mit geeigneten Beschichtungsmitteln erfolgt nach dem Stand der Technik durch Schmelzen des Beschichtungsmittels gegebenenfalls unter Einsatz von Zusatzstoffen bei erhöhten Temperaturen in Mischern und rotierenden Aggregaten.

So beschreibt die DE-OS-1642990 ein Verfahren zur Oberflächenbehandlung von Metalloxiden durch Granulierung bei erhöhter Temperatur, wobei man zu dem in einem heiz- und kühlbaren Fluidmischer mit schnell laufendem Rotor befindlichen Metalloxid die Granuliermittel, meist polare organische Substanzen in festem Zustand, gibt und mischt. Innerhalb von 10 bis 45 min. wird nun unter raschem Rühren bei Temperaturen zwischen 50 und 120°C das Granuliermittel geschmolzen. Danach können weitere Zuschlagstoffe, bestehend aus festen oder flüssigen Substanzen, zugegeben werden. Anschließend wird unter weiterem Rühren auf etwa 40°C abgekühlt. Man erhält je nach Arbeitsweise ein Granulat mit einer Korngröße von 0,5 bis 5 mm.

Im geschmolzenen Zustand wirken diese Granuliermittel als Bindemittel granulierend und verhindern bei Raumtemperatur als Trennmittel ein Zusammenkleben der Granulate.

Die Granulierung garantiert vor allem eine bessere Mischung der Granulate in den verschiedensten Stoffen. Im Gegensatz zur Verwendung von Pulvern erzielt man bei der Verwendung von Granulaten Staubfreiheit, und man kann die Granulate leichter und kontinuierlicher dosieren. Die vom Mahlprozeß oder anderen Bewegungsprozessen herrührende elektrostatische Aufladung wird vermindert und ein Anpassen oder Anreiben mit Bindemitteln überflüssig gemacht. Weiterhin sind Granulate bei der Lagerung vor Licht und Feuchtigkeit weitgehend geschützt.

Das Aufschmelzen von Bindemitteln und Additiven auf anorganische Metalloxide oder Pigmente ist in der Literatur vielfach beschrieben. Bei den hierbei benutzten beheizbaren Granuliertrommeln findet jedoch eine nicht sehr homogene Mischung des Granulierguts mit dem Granulierungsmittel statt. So kann es bei der mechanischen Weiterverarbeitung des beschichteten Materials, z.B. beim Rotieren der Granuliertrommel oder des Granuliertellers zu einer Entmischung des oberflächenbehandelten Metalloxids kommen. Weiterhin besteht die Gefahr, daß es beim Anheizen der Granuliertrommel zu einer ungleichmäßigen Wärmeverteilung kommt, die ebenfalls durch teilweises Abschmelzen des Beschichtungsmittels zu einer Entmischung des zunächst homogenen Granulats führt. Bei der späteren Erwärmung und gleichzeitigen Granulierung der Mischung entsteht dann eine inhomogene Verteilung des schmelzbaren Additivs im Granulat. Bei einer Erwärmung des Gemisches in Gefäßen kommt es zur Ablagerung von geschmolzenem Beschichtungsmittel an den Gefäßwänden des Aufschmelzreaktors.

Aufgabe der Erfindung war es daher, oberflächenbehandelte Metalloxide und ein Verfahren zu ihrer Herstellung zur Verfügung zu stellen, die einerseits die anwendungstechnischen Vorteile des Standes der Technik, wie bessere Dosierbarkeit, Fließfähigkeit, Staubfreiheit und bessere Einarbeitung in Kautschuke, Kunststoffe- und Bindemittelsysteme unverändert enthalten, aber andererseits die bereits geschilderten Nachteile, insbesondere die Entmischung der Granulate bei der Erwärmung und die unerwünschten Ablagerungen von geschmolzenen Additiven an den Gefäßwänden des Reaktors vermeiden und eine hochhomogene Verteilung und feste Haftung des Beschichtungsmittels auf dem Metalloxid erreichen.

Diese Aufgabe wird durch ein mit reaktiven und/oder nicht reaktiven Beschichtungsmitteln beschichtetes Metalloxid gelöst, das erhältlich ist durch Oberflächenbehandlung von durch Mikrowellen anregbaren Metalloxiden mit flüssigen oder festen reaktiven und/oder nicht reaktiven Beschichtungsmitteln, wobei die Energiezufuhr während der Beschichtung durch Mikrowellen erfolgt ist.

Weiterhin wird die Aufgabe durch ein Verfahren zur Oberflächenbehandlung von Metalloxiden gelöst, wobei die Metalloxide mindestens teilweise durch Mikrowellen anregbar sind und die Energiezufuhr bei der Oberflächenbehandlung durch Mikrowellen erfolgt.

Als durch Mikrowellen anregbare Metalloxide werden Zinkoxid, Titandioxid, Aluminiumoxid, Kobaltoxid oder Mischungen derselben verwendet.

Als reaktive oder nicht reaktive Beschichtungsmittel können gemahlene Balsamharze, Xylol-Indenharze, Styrolharze, Cumaron-Indenharze, Phenol-Formaldehyd-Harze, Terpen-Phenolharze, feste Paraffine, Alkohole, Fettalkohole, langkettige organische Säuren, aromatische Polyether, Fettsäureamide, Anhydride höherer Carbonsäuren und feste, höhere Metallseifen eingesetzt werden. In einer besonderen Ausführungsform werden die oberflächenbehandelten Metalloxide während oder unmittelbar nach der Beschichtung granuliert.

Das erfindungsgemäße Verfahren führt zur Herstellung staubarmer, fließfähiger und gut dispergierbarer oberflächenbeschichteter Metalloxide, die die dargestellten Nachteile des Standes der Technik durch eine besonders starke Haftung des homogen aufgeschmolzenen Oberflächenbehandlungsmittels vermeiden. Durch den direkten Wärmeeintrag mittels Mikrowellen auf ein in einer Mischung enthaltenes Metalloxid ohne gleichzeitiges mechanisches Bewegen der Mischung wird ein Entmischen der Komponenten beim Erwärmen und das Koagulieren der Mischungen ebenso verhindert, wie das Ansetzen des Binde- oder Beschichtungsmittels an den Reaktorwänden. Durch die einstrahlenden Mikrowellen erhöht sich nämlich die Temperatur des Metalloxids derart, daß das Beschichtungsmittel an den Reaktorwänden wie auch im Inneren der Mischung homogen zum Schmelzen gebracht wird. Auch wird die Oberfläche des Metalloxids durch Mikrowellen derart aktiviert, daß eine äußerst stark haftende Beschichtung erfolgt. Die Temperaturverteilung ist dabei innerhalb des Gefäßes homogen und unterscheidet sich damit weitgehend von einer Temperaturführung, die von außen erfolgt und daher im Inneren des Gemisches geringere Temperaturen erzeugt als im äußeren Teil. Beim Schmelzen koagulieren Metalloxide und Beschichtungsmittel zu kleinsten Kugeln und überziehen sich mit der organischen Komponente.

Die durch Bestrahlung des Metalloxids mit Mikrowellen erreichbaren Temperaturen reichen sogar bis zum Schmelzen oder Sintern der Oxide aus.

Zur Durchführung des Verfahrens wird ein Metalloxid oder ein Gemisch von Metalloxiden zunächst mit den organischen Additiven, die bevorzugt pulverisiert vorliegen, gemischt. Danach wird dieses Gemisch Mikrowellen ausgesetzt. Dabei erwärmt sich das Oxid, überträgt einen Teil der Wärme auf die nicht durch Mikrowellen anregbaren organischen Komponenten und bewirkt letztlich ein Schmelzen und damit Verbinden der organischen Komponenten mit dem Oxid. Die dabei notwendigen Bestrahlungszeiten sind äußerst gering und liegen im Bereich von 1 bis 10, vorzugsweise 5 min.

Die Eigenschaften des homogenen Produktes sind nur von der Homogenität der trockenen Vormischung und damit von den Korngrößen der beiden Komponenten und der Mischintensität abhängig. Die anorganische Metalloxidkomponente hat sich bei diesem Vorgang homogen oberflächlich belegt.

Das so hergestellte oberflächenbehandelte Metalloxid kann anschließend ohne weitere Wärmezufuhr mit klassischen Verfahren granuliert werden, um ein noch fließfähigeres und staubärmeres Produkt zu erhalten.

Der Anwendungsbereich von oberflächenbehandelten Metalloxiden ist insbesondere für Zinkoxid sehr vielfältig.

So lassen sich mit Harz oder Alkohol behandelte Zinkoxide sehr gut stippenfrei in Gummimischungen einmischen. Die beim Einmischen schmelzende, dann hochviskose organische Komponente nimmt als Träger das Oxid mit in die Mischung auf und verteilt das Oxid homogen.

Weiterhin erhöht mit Lichtschutzwachsen oder anderen UV-stabilisierenden organischen Komponenten oberflächenbehandeltes Zinkoxid synergistisch die UV-Stabilität eines Kunststoffes wie PVC.

Oberflächenreaktionen zwischen reaktiven organischen Verbindungen und oberflächenbehandeltem Zinkoxid, wie zum Beispiel die Bildung von Zinkstearat in der Mischung Stearinsäure-Zinkoxid, führen zu Stoffkombinationen, die die Kinetik der Vulkanisation positiv beeinflussen. Eine weitere Anwendungsform ist die Verwendung von oberflächenbehandeltem Zinkoxid bei zahlreichen Dispergiervorgängen, wobei das Additiv zum Oxid als Dispergierhilfsmittel und Dispersionsstabilisator verwendet werden kann.

Die folgenden Beispiele dienen zur näheren Erläuterung der Erfindung.

Beispiel I:

500 g Zinkoxid wurden mit 5 Gew.-% fein gemahlenem Balsamharz in einem Lödige-Mischer (10 min.) gemischt und das Gemisch in ein 800 ml Becherglas überführt. Das Becherglas wurde in ein haushaltsübliches Mikrowellengerät gestellt und 5 min. mit einer Strahlungsleistung von 90 W auf den Schmelzpunkt des Harzes erwärmt (ca. 100 $^\circ$ C). Nach Abkühlen erhielt man ein homogenes, fließfähiges Pulver, welches aus mikrofeinen Kugeln aufgebaut ist. Eine anschließende Trommelgranulierung (Verweilzeit 1 Std) führte zu einer weiteren Kornvergrößerung, das Produkt lag dann als Mikrogranulat vor.

Beispiel II:

500 g Zinkoxid wurden mit 5 Gew.-% fein gemahlenem 1-Octa-decanol (CH$_3$-(CH$_2$)$_{17}$OH) in einem Lödige-Mischer gemischt und das Gemisch in ein 800 ml Becherglas überführt. Das Becherglas wurde in ein haushaltsübliches Mikrowellengerät gestellt und 5 min. mit einer Strahlungsleistung von 90 W auf den Schmelzpunkt des Alkoholes erwärmt (ca. 58 - 60 $^\circ$ C). Nach Abkühlen erhielt man ein homogenes, fließfähiges Pulver, welches aus mikrofeinen Kugeln aufgebaut war. Auch mit diesem Produkt war eine anschließende Kornvergrößerung durch eine Trommelgranulierung möglich.

Beispiel III:

500 g Zinkoxid wurden mit 25 Gew.-% fein gemahlenem Balsamharz in einem Lödige-Mischer (10 min.) gemischt und das Gemisch in ein 800 ml Becherglas überführt. Das Becherglas wurde in ein haushaltsübliches Mikrowellengerät gestellt und 5 min. mit einer Strahlungsleistung von 90 W auf den Schmelzpunkt des Harzes erwärmt (ca. 100 $^\circ$ C).

Nach dem Abkühlen erhielt man ein zum Teil grobklumpiges Produkt. Die größeren, klumpigen Stücke ließen sich aber durch leichten mechanischen Druck pulverisieren, so daß man auch hier wieder ein pulveriges, fließfähiges Endprodukt erhielt.

Beispiel IV:

250 g Titandioxid (Rutil) wurden mit 10 Gew.-% Cumaron-Indenharz gemischt. Das Gemisch wurde in ein Becherglas überführt und 4 min. mit 600 W Strahlungsleistung im Mikrowellenofen auf den Schmelzpunkt des Harzes (ca. 90° C) erwärmt. Man erhielt ein fließfähiges Pulver, das aus Mikrokugeln aufgebaut war.

**Patentansprüche**

1. Mit reaktiven und/oder nicht reaktiven Beschichtungsmitteln beschichtete Metalloxide, erhältlich durch Oberflächenbehandlung von durch Mikrowellen anregbaren Metalloxiden mit flüssigen oder festen reaktiven und/oder nicht reaktiven Beschichtungsmitteln, wobei die Energiezufuhr durch Mikrowellen erfolgt ist.

2. Verfahren zur Oberflächenbehandlung von Metalloxiden mit flüssigen oder festen reaktiven und/oder nicht reaktiven Beschichtungsmitteln, dadurch gekennzeichnet, daß die Metalloxide mindestens teilweise durch Mikrowellen anregbar sind und die Energiezufuhr bei der Oberflächenbehandlung durch Mikrowellen erfolgt.

3. Verfahren nach Anspruch 2, dadurch gekennzeichnet, daß als durch Mikrowellen anregbare Metalloxide Zinkoxid, Titandioxid, Aluminiumoxid, Cobaltoxid oder Mischungen derselben verwendet werden.

4. Verfahren nach den Ansprüchen 2 und 3, dadurch gekennzeichnet, daß als reaktive oder nicht reaktive Beschichtungsmittel gemahlene Balsamharze, Xylol-Indenharze, Styrolharze, Cumaron-Indenharze, Phenol-Formaldehyd-Harze, Terpen-Phenolharze, feste Paraffine, Alkohole, Fettalkohole, langkettige organische Säuren, aromatische Polyether, Fettsäureamide, Anhydride höherer Carbonsäuren und feste höhere Metallseifen eingesetzt werden.

5. Verfahren nach einem der Ansprüche 2 bis 4, dadurch gekennzeichnet, daß die oberflächenbehandelten Metalloxide während oder unmittelbar nach der Beschichtung granuliert werden.